# EUROPEAN PATENT APPLICATION

(11) **EP 2 244 100 A1**
(43) Date of publication of application: **27.10.2010**
(21) Application number: 09167990.2
(22) Date of filing: 17.08.2009
(51) Int. Cl.: G01S 7/529, G01S 15/10, G01S 15/88

(54) **Ultrasound receiving module, ultrasound detecting system and method with document camera using the same**

(30) Priority: 24.04.2009 TW 98113773
(71) Applicant: AVerMedia Information, Inc., Chung-Ho City, Taipei Hsien (TW)
(72) Inventor: Lo, Yi-Chung, Taipei Hsien (TW); Chen, Chih-Ming, Taipei Hsien (TW); Hsu, Chun-Kai, Taipei Hsien (TW)
(74) Representative: Becker Kurig Straus

(57) **Abstract**

An ultrasound receiving module includes an ultrasonic receiver, an amplifier and a detector. The ultrasonic receiver is used to receive at least one ultrasonic signal. The amplifier is electrically connected to the ultrasonic receiver for changing an amplitude of the ultrasonic signal with a predetermined magnification ratio, wherein the predetermined magnification ratio is increased with time. The detector is electrically connected to the amplifier for capturing a portion of the ultrasonic signal above a threshold level, wherein the threshold level is decreased with time.

## Description

### RELATED APPLICATIONS

This application claims priority to Taiwan Application Serial Number 98113773, filed April 24, 2009, which is herein incorporated by reference.

### BACKGROUND

### Field of Invention

The present invention relates to an ultrasound detecting apparatus and an ultrasound detecting method. More particularly, the present invention relates to an apparatus and a method using an ultrasonic wave to detect a distance.

### Description of Related Art

With the development of industrial technologies, the demands of automatic distance detection system are daily increased. For example, the applications of vehicle parking, automated guided vehicle operation or space position system often use the automatic distance detection systems to smoothly park a car to a fixed position and to enable an automated guided vehicle to carry a cargo swiftly to a predetermined spot without being interfered with other obstacles.

Conventionally, a distance detection system uses ultrasonic waves as media for detecting a distance by using air as a transmission media, wherein a reflected ultrasonic wave is used to detect a distance from an object.

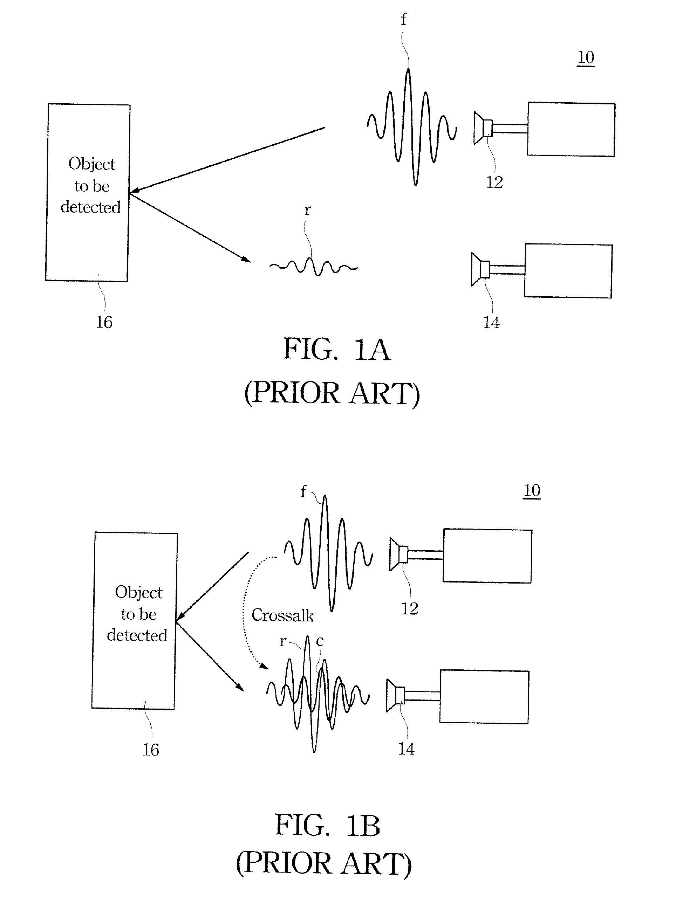

FIG. 1A and FIG. 1B are schematic diagrams showing a conventional reflection-type ultrasound distance detection system 10. For example, referring to FIG. 1A, a conventional reflection-type ultrasound distance detection system 10 includes a transmitter 12, a receiver 14, an object 16 to be detected and a peripheral circuit (not shown). The object 16 to be detected is spaced from the transmitter and/or the receiver 14 at a distance desired to be measured.

While being in operation, the transmitter 12 generates an incident wave f. A portion of incident wave f arrives at the object 16, and is reflected as a reflected wave r to the receiver 14.

The distance desired to be detected between the object 16 and the transmitter 12 and/or the receiver 14, is computed by using a time difference value between the time point at which the incident wave f is transmitted and that at which the reflected wave r is received.

The reflection-type ultrasound distance detection system 10 has many disadvantages. For example, the signal of the reflected wave r is too weak to be detected. Concretely speaking, when an ultrasonic wave is propagated in a space, the amplitude strength of the ultrasonic wave traveling in the air will be greatly decreased with increasing traveling distance. Consequently, during a far-distance measurement, the amplitude strength of the ultrasonic wave is too weak, and the signal-to-noise ratio thereof is decreased rapidly, thus disadvantaging the measurement accuracy.

Please refer to FIG. 1B. On the other hand, in an actual measurement environment, besides the reflected wave f reflected by the object 16, there exist many interference signals, such as crosstalk noise c due to crosstalk phenomenon. During a near-distance measurement, since the distance to be measured is shorter, the reflected wave r reflected by the object 16 will overlap with the crosstalk noise c, thus leading an incorrect detection result.

In view of the forgoing, there is a need to provide a novel ultrasound detecting apparatus and a novel method for promoting the measurement accuracy under far-distance and near-distance modes.

### SUMMARY

One aspect of the present invention is to provide an ultrasound receiving module using a time-varying method to promote its measurement accuracy. The ultrasound receiving module includes an ultrasonic receiver, an amplifier and a detector. The ultrasonic receiver is used for receiving at least one ultrasonic signal. The amplifier is electrically connected to the ultrasonic receiver. The amplifier is used for providing a predetermined magnification ratio and changing an amplitude of the received ultrasonic signal with the predetermined magnification ratio, i.e., the amplifier will multiply the amplitude of the received ultrasonic signal by the predetermined magnification ratio, wherein the predetermined magnification ratio is increased with time. In other words, the predetermined magnification ratio provided by the amplifier is a time-varying function, and is increased with time.

The detector is electrically connected to the amplifier for capturing a portion of the ultrasonic signal in accordance with a threshold level, wherein the portion of the ultrasonic signal captured is above the threshold level, and the threshold level is decreased with time. In other words, the threshold level provided by the detector also is a time-varying function, and is decreased with time.

In one embodiment, the ultrasound receiving module includes a processor electrically connected to the detector. When the amplitude of the ultrasonic signal is greater than threshold level, the processor computes a transmitting distance of the ultrasonic signal in accordance with time spent for receiving the ultrasonic signal.

In another embodiment, the predetermined magnification ratio is a continuous time-varying function. In another embodiment, the threshold level is a continuous time-varying function.

Another aspect of the present invention is to provide an ultrasound detecting system for promoting the measurement accuracy when the transmitting time of ultrasonic signal is shorter or longer. The ultrasound detecting system has an ultrasonic transmitter, an ultrasonic receiver, an amplifier and a detector. The ultrasonic transmitter transmits at least one first ultrasonic signal, and the ultrasonic receiver receives at least one second ultrasonic signal, wherein the second ultrasonic signal includes the first ultrasonic signal and at least one interference signal.

The amplifier is electrically connected to the ultrasonic receiver, and changes an amplitude of the second ultrasonic signal with a predetermined magnification ratio, wherein the predetermined magnification ratio is increased with time.

The detector is electrically connected to the amplifier, and captures a portion of the second ultrasonic signal above a threshold level, wherein the threshold level is decreased with time.

Another aspect of the present invention is to provide an ultrasound detecting method for promoting the measurement accuracy when the transmitting time of ultrasonic signal is shorter or longer. The first step of the ultrasound detecting method is to transmit at least one first ultrasonic signal. Then, at least one second ultrasonic signal is received. Thereafter, a predetermined magnification ratio is used to change an amplitude of the second ultrasonic signal, wherein the predetermined magnification ratio is increased with time. Then, a threshold level is used to capture a portion of the second ultrasonic signal above the threshold level, and the threshold level is decreased with time.

In one embodiment, a portion of the second ultrasonic signal of which a frequency is within a frequency range is filtered and obtained, wherein the frequency range contains a frequency of the first ultrasonic signal. In another embodiment, after the first portion of the second ultrasonic signal above the threshold level is captured, a transmitting distance of the first ultrasonic signal is computed.

Another aspect of the present invention is to provide a document camera comprising a base, a lens and an ultrasound detecting system. The lens is suspended on the base for capturing at least one image of at least one object to be photographed. The ultrasound detecting system is used for detecting a distance between the lens and the object to be photographed.

In one embodiment, the document camera includes a switcher. The switcher is electrically connected to the ultrasonic transmitter for switching between a near-distance mode and a far-distance mode, wherein the first ultrasonic signal has a first cycle number at a near-distance mode, and the first ultrasonic signal has a second cycle number at a far-distance mode, and the first cycle number is different from the second cycle number.

It can be known from the above embodiments that, when the transmitting time of ultrasonic signal is short, such as when handling a short distance measurement, a small predetermined magnification ratio is applied to suppress the interference of crosstalk signal, and a high threshold level is applied to get rid of the crosstalk signal; when the transmitting time of ultrasonic signal is long, such as when handling a far distance measurement, the predetermined magnification ratio is increased to amplify the ultrasonic signal, and the high threshold level is decreased to increase detection sensitivity.

It is to be understood that both the foregoing general description and the following detailed description are examples, and are intended to provide further explanation of the invention as claimed.

### BRIEF DESCRIPTION OF THE DRAWINGS

These and other features, aspects, and advantages of the present invention will become better understood with regard to the following description, appended claims, and accompanying drawings where:
FIG. 1A and FIG. 1B are schematic diagrams showing a conventional reflection-type ultrasound distance detection system;
FIG. 2 is a block diagram showing an ultrasound detecting system according to an embodiment of the present invention;
FIG. 3A is a diagram showing a curve of ultrasonic signal vs. time;
FIG. 3B is a diagram showing a curve of predetermined magnification ratio vs. time;
FIG. 3C is a diagram showing a curve of threshold level vs. time;
FIG. 4 is a schematic diagram showing a document camera according to another embodiment of the present invention; and
FIG. 5 is a flow chart showing an ultrasound detecting method according to another embodiment of the present invention.

### DESCRIPTION OF THE PREFERRED EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

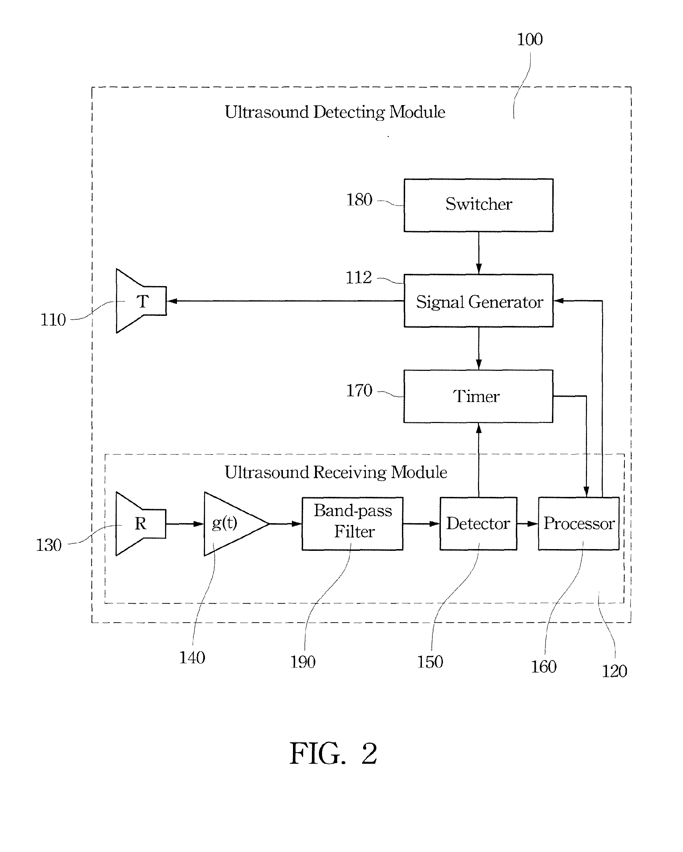

Referring to FIG. 2, FIG. 2 is a block diagram showing an ultrasound detecting system 100 according to an embodiment of the present invention. The ultrasound detecting system 100 includes an ultrasonic transmitter 110 and an ultrasound receiving module 120.

The ultrasonic transmitter 110 is electrically connected to a signal generator 112. The signal generator 112 may generate an ultrasonic signal, and the ultrasonic signal is radiated into space via the ultrasonic transmitter 110. For clarity, the ultrasonic signal transmitted from the ultrasonic transmitter 110 is referred to as a first ultrasonic signal hereinafter.

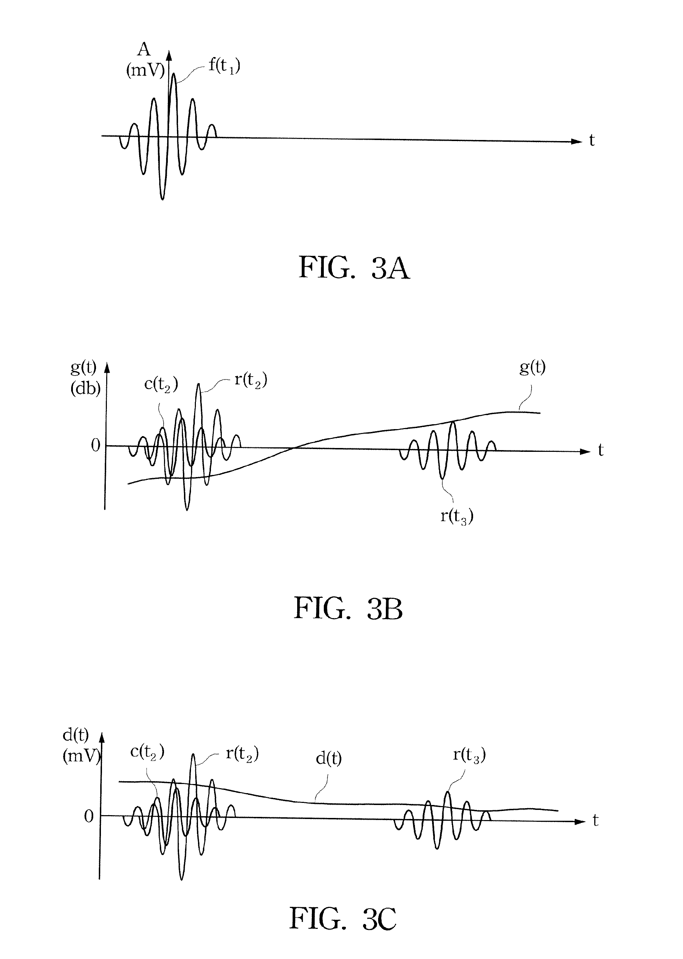

FIG. 3A to FIG. 3C are diagrams showing the respective curves of ultrasonic signal vs. time; predetermined magnification ratio vs. time; and threshold level vs. time. Please refer to FIG. 2 and FIG. 3A simultaneously. In this embodiment, the ultrasonic transmitter 110 issues a first ultrasonic signal f(t₁) into air space at a first time point t₁.

The ultrasound receiving module 120 can be used to receive and handle an ultrasonic signal. The ultrasound receiving module 120 includes an ultrasonic receiver 130 used for receiving ultrasonic signals. For clarity, the ultrasonic signal received by the ultrasonic receiver 130 is referred to as a second ultrasonic signal hereinafter.

Please refer to FIG. 2 and FIG. 3B simultaneously. The second ultrasonic signal includes a signal to be detected and an interference signal in an environment. In this embodiment, the signal to be detected is the first ultrasonic signal f(t₁) which is issued from the ultrasonic transmitter 110 and received by the ultrasonic receiver 130 after propagating in space.

The ultrasonic transmitter 110 and the ultrasonic receiver 130 can be disposed opposite to each other, and spaced at a distance, so that the ultrasonic transmitter 110 can transmit the first ultrasonic signal f(t₁) towards the ultrasonic receiver 130. Further, the ultrasonic transmitter 110 also can be disposed adjacent to and does not face towards the ultrasonic receiver 130. The first ultrasonic signal f(t₁) issued from the ultrasonic transmitter 110 is reflected by other objects to the ultrasonic receiver 130. In this embodiment, the ultrasonic transmitter 110 also can be disposed adjacent to the ultrasonic receiver 130, and the ultrasonic receiver 130 receives a returned signal reflected by other objects.

When an ultrasonic wave is traveling in space, its strength is decreased with the increasing distance. The longer the traveling distance is, the longer the travel time is. Thus, the strength of the signal to be detected received by the ultrasonic receiver 130 will be decreased with time. For example, the strength of the signal r(t₂) to be detected received at a second time point t₂ will be greater than the strength of the signal r(t₃) to be detected received at a third time point t₃, wherein the third time point t₃ is greater than the second time point t₂. Conventionally, when the strength of the ultrasonic signal is too weak, the signal-to-noise ratio will decrease rapidly, thus disadvantaging the measurement accuracy.

On the other hand, at a time point closer to the time point of issuing the signal, the ultrasonic receiver 130 will receive a crosstalk signal c(t₂) due to crosstalk phenomenon. Since the waveform and strength of the crosstalk signal c(t₂) are similar to those of the signal r(t₂) to be detected, thus easily causing a conventional ultrasound system to make an incorrect judgement.

The ultrasound detecting system 100 of the present invention uses the following devices and method to resolve these problems, thereby promoting the measurement accuracy.

An amplifier 140 is disposed in the ultrasound detecting system 100, and is electrically connected to the ultrasonic receiver 130 for changing the amplitude of the second ultrasonic signal, i.e., for enlarging or shrinking the amplitude of the second ultrasonic signal. Concretely speaking, the amplifier 140 uses a predetermined magnification ratio g(t) to change the amplitude of the second ultrasonic signal, wherein the predetermined magnification ratio g(t) is increased with time. In other words, the predetermined magnification ratio g(t) is a time-varying function and is increased with time.

FIG. 3B is a diagram showing a curve of predetermined magnification ratio vs. time, wherein the horizontal axis stands for time, and the vertical axis stands for the predetermined magnification ratio g(t).

The predetermined magnification ratio g(t) is a continuous time-varying function, and is increased with time. At a time point closer to the time point of origin of issuing the signal, such as at the second time point t₂, the predetermined magnification ratio g(t) is smaller so as to suppress the interference of crosstalk signal c(t₂). On the other hand, at a time point farther from the time point of origin of issuing the signal, such as at the third time point t₃, the predetermined magnification ratio g(t) is larger so as to amplify the strength of the signal r(t₃) to be detected.

A detector 150 is further disposed in the ultrasound detecting system 100, and is electrically connected to the amplifier 140 for capturing a portion of the second ultrasonic signal. A threshold level d(t) is set in the detector 150, and the detector 150 will capture a portion of the amplified second ultrasonic signal above the threshold level d(t), wherein the threshold level d(t) is decreased with time. In other words, the threshold level d(t) provided by the detector 150 is a time-varying function and is decreased with time.

Referring to FIG. 2 and FIG. 3C simultaneously, FIG. 3C is a diagram showing a curve of threshold level d(t) vs. time for explaining the states of the threshold level d(t) changed with time, wherein the horizontal axis stands for time, and the vertical axis stands for the threshold level d(t).

The threshold level d(t) is a continuous time-varying function, and is decreased with time. At a time point closer to the time point of origin of issuing the signal, such as at the second time point t₂, the threshold level d(t) is larger so as to raise the reference value of detection, thereby preventing the crosstalk signal c(t₂). On the other hand, at a time point farther from the time point of origin of issuing the signal, such as at the third time point t₃, the threshold level d(t) is smaller so as to increase the sensitivity of the signal r(t₃) to be detected.

A band-pass filter 190 is further disposed in the ultrasound detecting system 100 for providing a frequency range and filtering and obtaining a portion of the second ultrasonic signal of which a frequency is within the frequency range. Concretely speaking, the band-pass filter 190 will set a frequency range, and keep the portion of the second ultrasonic signal of which a frequency is within the frequency range. Basically, the frequency range of the band-pass filter 190 includes the frequency of the first ultrasonic signal. In other words, the frequency of the first ultrasonic signal transmitted by the ultrasonic transmitter 110 falls within the frequency range. For example, the frequency of the first ultrasonic signal can be 40KHZ, and the frequency range of the band-pass filter 190 can be around 40KHZ, such as between 38KHZ and 42 KHz. Accordingly, the portion of the second ultrasonic signal filtered and obtained is very likely to be the first ultrasonic signal after propagating in space.

The band-pass filter 190 can be electrically connected to the amplifier 140 and/or the detector 150. In this embodiment, the band-pass filter 190 is disposed between the amplifier 140 and the detector 150. In other words, after being received, the second ultrasonic signal sequentially passes through the amplifier 140 for changing its amplitude; then through the band-pass filter 190 for filtering and obtaining a portion of its frequency within a specific frequency range; and then through the detector 150 for capturing a portion of its amplitude above the threshold level d(t).

The ultrasound detecting system 100 includes a processor 160 electrically connected to the detector 150. After the detector 150 captures the portion of the second ultrasonic signal, the processor 160 will compute a transmitting distance of the first ultrasonic signal f(t₁) by computing the time spent for receiving the ultrasonic signal. Detailedly speaking, a timer 170 is disposed in the ultrasound detecting system 100. The timer 170 is electrically connected to the ultrasonic transmitter 110 for recording a time point, such as the first time point t₁, at which the ultrasonic transmitter issues the first ultrasonic signal.

The timer 170 is further electrically connected to the ultrasonic receiver 130 or the detector 150 for recording a time point for receiving the signal. Detailedly speaking, the timer 170 can be electrically connected to the ultrasonic receiver 130 and record the time point at which the ultrasonic receiver 130 receives the signal. Further, the timer 170 can be electrically connected to the detector 150 record the time point at which the signal including the signal r(t₂) to be detected is received. In other words, when the detector 150 captures the second ultrasonic signal, meaning that the second ultrasonic signal including the signal r(t₂) to be detected is received, the current time point can be recorded as the second time point t₂. In on embodiment, the timer 170 is electrically connected to the detector 150.

The process or 160 is electrically connected to the timer 170. After the processor 170 completes a step of comparing the first time point t₁ and the second time point t₂, the processor 160 calculates a difference value between the first time point t₁ and the second time point t₂, and computes the transmitting distance of the first ultrasonic signal f(t₁) in accordance with the difference value. Concretely speaking, the processor 160 obtains the transmitting distance of the first ultrasonic signal f(t₁) by multiplying the difference value between the first time point t₁ and the second time point t₂ by the propagation speed of ultrasonic wave.

Just as described above, in the embodiment, the first ultrasonic signal f(t₁) issued by the ultrasonic transmitter 110 is first reflected by the object to be detected and then reaches the ultrasonic receiver 130. Hence, the transmitting distance of the first ultrasonic signal f(t₁) is the sum of the distance between the ultrasonic transmitter 110 and the object to be detected and that between the object to be detected and the ultrasonic receiver 130. In another embodiment, the ultrasonic transmitter 110 is disposed tightly adjacent to the ultrasonic receiver 130, and thus the transmitting distance of the first ultrasonic signal f(t₁) is about twice as much as the distance between the ultrasonic transmitter 110 and the object to be detected.

Further, in another embodiment, the ultrasonic transmitter 110 and the ultrasonic receiver 130 are disposed opposite to each other, and spaced at a distance. Thus, the transmitting distance of the first ultrasonic signal f(t₁) is the distance between the ultrasonic transmitter 110 and the ultrasonic receiver 130.

On the other hand, the processor 160 can be electrically connected to the signal generator 112, thereby adjusting the time for generating a signal by the signal generator 112.

For promoting the measurement accuracy under far-distance and near-distance modes, the ultrasound detecting system 100 further includes a switcher 180 electrically connected to the ultrasonic transmitter 110. The switcher 180 is used to switch the ultrasonic transmitter 110 to the far-distance mode or the near-distance mode. When being at the near-distance mode, the first ultrasonic signal f(t₁) issued by the ultrasonic transmitter 110 has a first cycle number. When being at the far-distance mode, the first ultrasonic signal f(t₁) issued by the ultrasonic transmitter 110 has a second cycle number, wherein the first cycle number is different from the second cycle number.

It is noted that the situation of so-called "near-distance" or "shorter ultrasonic signal transmitting time" indicates the situation which is easily influenced by the crosstalk signal c(t₂). Further, the situation of so-called "far-distance" or "longer ultrasonic signal transmitting time" indicates the situation which is not easily influenced by the crosstalk signal c(t₂).

In one embodiment, the first cycle number is smaller than the second cycle number. At the near-distance mode, the first cycle number of the first ultrasonic signal f(t₁) is smaller, and thus the duration of crosstalk interference can be shortened. On the contrary, at the far-distance mode, the second cycle number of the first ultrasonic signal f(t₁) is larger, and thus the transmission energy accumulated may increase the possibility of detecting the first ultrasonic signal f(t₁).

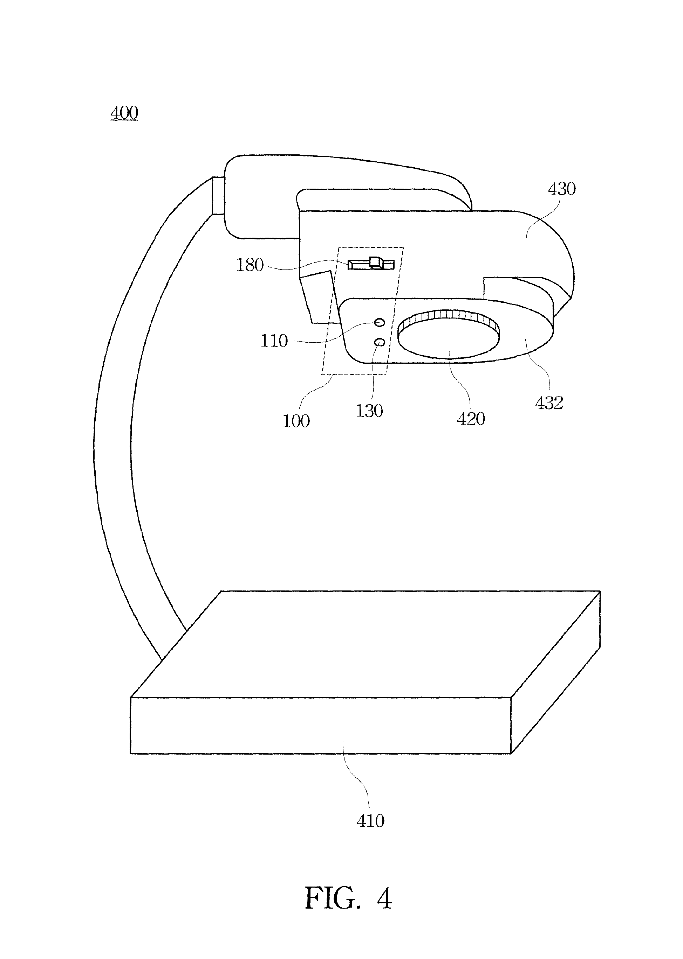

FIG. 4 is a schematic diagram showing a document camera 400 according to another embodiment of the present invention. Please refer to FIG. 4 and FIG. 2 simultaneously. The document camera 400 includes a base 410, a lens 420 and the ultrasound detecting system 100. The description regarding the ultrasound detecting system 100 has been stated in the above, and is not repeated herein.

The lens 420 is suspended above the base 410 for capturing an image of an object to be photographed. The lens 420 of the document camera 400 can be rotated to make the lens 420 face towards the base 410 or another direction for photography. For example, when the document camera 400 is used at one end of a room, the lens 420 may photograph an object (such as a book) lying on the base 410. The lens 420 also may photograph another object (such a picture hung on a wall) at the other end of the room.

The ultrasonic transmitter 110 and the ultrasonic receiver 130 of the ultrasound detecting system 100 are disposed adjacent to the lens 420. Concretely speaking, the lens 420 is installed on a surface 432 of a housing 430, and the ultrasonic transmitter 110 and the ultrasonic receiver 130 are disposed on the same surface 430 and are adjacent to the lens 420, as shown in FIG. 4. Consequently, the ultrasound detecting system 100 can be used to detect the distance between the lens 420 and the object to be photographed.

The switcher 180 of the ultrasound detecting system 100 can be a manual switcher or an automatic switcher. For example, the switcher 180 of the ultrasound detecting system 100 shown in FIG. 4 is a manual switcher, and a user may manually switch the switcher 180 to the near-distance or far-distance mode. Further, the switcher 180 also can be an automatic switcher. For example, a sensor is used to detect the current position of the lens 420, thereby automatically switching the switcher 180. There are many types of sensors and their functions ap plicable to the embodiments of the present invention, which are not described in detail herein.

For example, when the lens 420 faces towards the base 410 for photographing an object (such as a book) placed on the base 410, the switcher 180 can be switched to the near-distance mode. When the lens 420 faces towards another direction for photographing an object (such as a picture hung on a wall), the switcher 180 can be switched to the far-distance mode.

It can be known from the above embodiments that the ultrasound detecting system 100 and its application such as the document camera 400 are applicable to the near-distance and far-distance measurements, thereby overcoming the restriction of the conventional measurement, promoting detection cleverness.

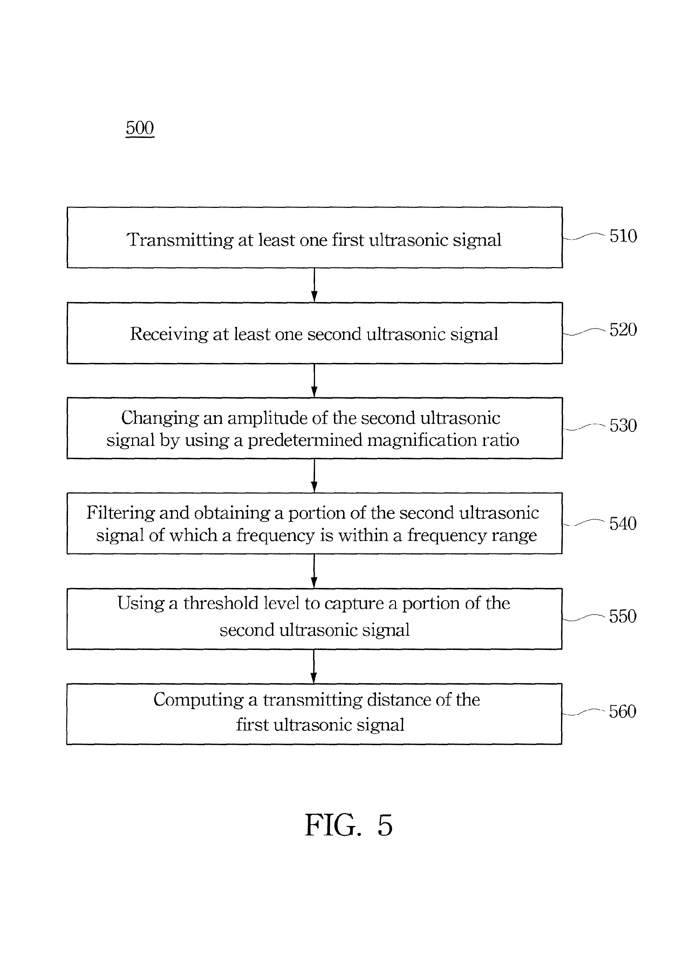

Referring to FIG. 5, FIG. 5 is a flow chart showing an ultrasound detecting method 500 according to another embodiment of the present invention.

In the ultrasound detecting method 500, step 510 is performed to transmit at least one first ultrasonic signal. Then, in step 520, at least one second ultrasonic signal is received. The second ultrasonic signal includes a signal to be detected and an environmental interference signal such as a crosstalk interference signal. The signal to be detected means the first ultrasonic signal received after propagating in space since being transmitted at step 510.

Thereafter, in step 530, an amplitude of the second ultrasonic signal is changed by using a predetermined magnification ratio, wherein the predetermined magnification ratio is increased with time.

Then, in step 540, a portion of the second ultrasonic signal of which a frequency is within a frequency range is filtered and obtained. In this step, a band-pass filter is used to filter the second ultrasonic signal so as to obtain the portion of the second ultrasonic signal of which a frequency is within the frequency range, wherein the frequency of the first ultrasonic signal falls within the frequency range.

Thereafter, in step 550, a threshold level is used to capture a portion of the second ultrasonic signal, wherein the amplitude of the second ultrasonic signal captured is greater than the threshold level, and the threshold level is decreased with time.

In one embodiment, when the amplitude of the second ultrasonic signal captured is greater than the threshold level, step 560 is performed to compute a transmitting distance of the first ultrasonic signal.

There are many types of methods for computing the transmitting distance of the first ultrasonic signal. In one embodiment, the transmitting distance of the first ultrasonic signal is obtained by computing the time for transmitting the first ultrasonic signal.

Concretely speaking, the ultrasound detecting method 500 may record a first time point at which the first ultrasonic signal is issued when step 510 is performed. Then, the ultrasound detecting method 500 may record a second time point at which the second ultrasonic signal is received, or, in step 550, record a second time point at which the amplitude of the second ultrasonic signal greater than the threshold level is captured.

Thereafter, a difference value between the first time point and the second time point is calculated, and then the difference value is based on to compute the transmitting distance of the first ultrasonic signal.

It can be known from the above embodiments that the ultrasound detecting system 100 and its ultrasound detecting method 500 are suitable for use in near-distance and far-distance measurements. By using the time-varying predetermined magnification ratio, the time-varying threshold value and/or the ultrasonic signal with an adjustable cycle number, the interference of crosstalk signal can be suppressed or prevented when a near-distance measurement is performed, and when a far-distance measurement is performed, the strength of the signal to be detected can be enhanced to overcome the restriction of the conventional measurement, thus promoting detection cleverness.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. An ultrasound receiving module, comprising:
an ultrasonic receiver for receiving at least one ultrasonic signal;
an amplifier electrically connected to the ultrasonic receiver for providing a predetermined magnification ratio and changing an amplitude of the ultrasonic signal with the predetermined magnification ratio, wherein the predetermined magnification ratio is increased with time; and
a detector electrically connected to the amplifier for providing a threshold level and capturing a portion of the ultrasonic signal above the threshold level, wherein the threshold level is decreased with time.

2. The ultrasound receiving module as claimed in claim 1, further comprising:
a processor electrically connected to the detector, wherein when the amplitude of the ultrasonic signal is greater than threshold level, the processor computes a transmitting distance of the ultrasonic signal in accordance with time spent for receiving the ultrasonic signal.

3. The ultrasound receiving module as claimed in claim 1, wherein the predetermined magnification ratio is a continuous time-varying function, and the threshold level is a continuous time-varying function.

4. An ultrasound detecting system, comprising:
an ultrasonic transmitter for transmitting at least one first ultrasonic signal;
an ultrasonic receiver for receiving at least one second ultrasonic signal, wherein the second ultrasonic signal comprises the first ultrasonic signal and at least one interference signal;
an amplifier electrically connected to the ultrasonic receiver for providing a predetermined magnification ratio and changing an amplitude of the second ultrasonic signal with the predetermined magnification ratio, wherein the predetermined magnification ratio is increased with time; and
a detector electrically connected to the amplifier for providing a threshold level and capturing a first portion of the second ultrasonic signal above the threshold level, wherein the threshold level is decreased with time.

5. The ultrasound detecting system as claimed in claim 4, further comprising:
a band-pass filter electrically connected to the detector for providing a frequency range and filtering and obtaining a second portion of the second ultrasonic signal of which a frequency is within the frequency range, wherein the band-pass filter sets the frequency range to contain a frequency of the first ultrasonic signal.

6. The ultrasound detecting system as claimed in claim 5, further comprising:
a processor electrically connected to the detector, wherein the processor computes a transmitting distance of the first ultrasonic signal when the detector has captured the first portion of the second ultrasonic signal of which the amplitude of is greater than threshold level.

7. The ultrasound detecting system as claimed in claim 6, further comprising:
a timer electrically connected to the ultrasonic transmitter and the detector for recording a first time point at which the ultrasonic transmitter issues the first ultrasonic signal, and a second time point at which the detector captures the second ultrasonic signal.

8. The ultrasound detecting system as claimed in claim 7, wherein the processor is electrically connected to the timer for computing the transmitting distance of the first ultrasonic signal in accordance with a difference value between the first time point and the second time point.

9. The ultrasound detecting system as claimed in claim 4, further comprising:
a switcher electrically connected to the ultrasonic transmitter for switching between a near-distance mode and a far-distance mode, wherein the first ultrasonic signal has a first cycle number at the near-distance mode, and the first ultrasonic signal has a second cycle number at the far-distance mode, and the first cycle number is different from the second cycle number.

10. An ultrasound detecting method, comprising:
transmitting at least one first ultrasonic signal;
receiving at least one second ultrasonic signal;
changing an amplitude of the second ultrasonic signal by using a predetermined magnification ratio, wherein the predetermined magnification ratio is increased with time; and
using a threshold level to capture a first portion of the second ultrasonic signal above the threshold level, wherein the threshold level is decreased with time.

11. The ultrasound detecting method as claimed in claim 10, further comprising:
filtering and obtaining a second portion of the second ultrasonic signal of which a frequency is within a frequency range, wherein the frequency range contains a frequency of the first ultrasonic signal.

12. The ultrasound detecting method as claimed in claim 11, further comprising:
recording a first time point at which the first ultrasonic signal is issued;
recording a second time point at which the second ultrasonic signal is received;
computing a difference value between the first time point and the second time point; and
computing a transmitting distance of the first ultrasonic signal in accordance with the difference value after the step of using the threshold level to capture the first portion of the second ultrasonic signal above the threshold level is performed.

13. The ultrasound detecting method as claimed in claim 11, further comprising:
recording a first time point at which the first ultrasonic signal is issued;
recording a second time point at which the first portion of the second ultrasonic signal above the threshold level is captured;
computing a difference value between the first time point and the second time point; and
computing a transmitting distance of the first ultrasonic signal in accordance with the difference value after the step of using the threshold level to capture the first portion of the second ultrasonic signal above the threshold level is performed.

14. A document camera, comprising:
a base;
a lens suspended on the base for capturing at least one image of at least one object to be photographed; and
an ultrasound detecting system as claimed in claim 5 for detecting a distance between the lens and the object to be photographed.

15. The document camera as claimed in claim 14, further comprising:
a switcher electrically connected to the ultrasonic transmitter for switching between a near-distance mode and a far-distance mode, wherein the first ultrasonic signal has a first cycle number at the near-distance mode, and the first ultrasonic signal has a second cycle number at the far-distance mode, and the first cycle number is different from the second cycle number, and the switcher is switched to the near-distance mode when the lens faces towards the base.
